# EUROPÄISCHE PATENTSCHRIFT

(11) **EP 2 711 503 B1**
(45) Veröffentlichungstag und Bekanntmachung des Hinweises auf die Patenterteilung: **12.08.2020**
(21) Anmeldenummer: 13184577.8
(22) Anmeldetag: 16.09.2013
(51) Int. Cl.: F01D 15/12, F01D 13/00, F01D 25/14, F04D 25/02, F04D 25/16, F02C 7/32, F16H 1/20

(54) **Getriebeturbomaschine**
Geared turbomachine
Turbomachine à engrenage

(30) Priorität: 19.09.2012 DE 102012018468
(43) Veröffentlichungstag der Anmeldung: 26.03.2014
(73) Patentinhaber: MAN Energy Solutions SE, 86153 Augsburg (DE)
(72) Erfinder: Aschenbruck, Emil, 47167 Duisburg (DE); Bennewa, Carsten, 46145 Oberhausen (DE); Boje, Sven, 46487 Wesel (DE); Riße, Bernd, 44879 Bochum (DE); Gingter, Philipp, 41066 Mönchengladbach (DE)

(56) Entgegenhaltungen:
- EP-A2- 2 128 448
- EP-B1- 1 691 081
- CH-A- 266 731
- GB-A- 210 456
- GB-A- 967 091
- GB-A- 2 321 502
- US-A1- 2004 093 869
- US-B1- 6 615 586

## Beschreibung

Die Erfindung betrifft eine Getriebeturbomaschine, die über ein Getriebe An- und/oder Abtriebsaggregate zu einem Maschinenstrang integriert, mit den Merkmalen des Oberbegriffes des Anspruchs 1.

In der EP 1 691 081 B1 ist eine mehrstufige Getriebeturbomaschine mit einem integrierten Getriebe und mit An- und/oder Abtriebsaggregaten beschrieben. An- und Abtriebsaggregate sind Kompressoren, Dampfturbinen, Gasturbinen, Motoren, Generatoren und Expander, wobei hierbei einerseits die Anordnung dieser Aggregate in derselben horizontalen Ebene besonders vorteilhaft ist und andererseits durch das Vorhandensein eines Großrades sowie eines zusätzlichen Antriebsritzels die Integration einer Vielzahl von Möglichkeiten der einsetzbaren An- und Abtriebsaggregate ermöglicht wird. Aus betriebsinterner Praxis sind Maschinenstränge nach der EP 1 691 081 B1 bekannt, die wie vorhergehend beschrieben aufgebaut sind, allerdings hinsichtlich der optional einzubindenden Expander Nachteile aufweisen. Derzeitige Anordnungen beinhalten lediglich Radialexpander; nachteilig sind hierbei allerdings Begrenzungen hinsichtlich der zu realisierenden Volumenströme, und somit kommen die konstruktiv möglichen Radialexpander an die Grenzen der umzusetzenden Baugrößen. Neben den im Maschinenstrang nicht mehr möglichen großen Bauvolumen haben bereits schon im baulichen Grenzbereich befindliche Radialexpander den Nachteil höherer Materialkosten, denn prozessbedingt sind teure hochlegierte Werkstoffe sowie oft auch zweischalige Gehäuseanordnungen erforderlich. Aufgrund begrenzter Geometrien, insbesondere des Großrades, ist das Bauvolumen für die Aggregate des Maschinenstrangs einer Getriebeturbomaschine begrenzt, und die Verarbeitung von immer höheren Volumenströmen ist somit limitiert.

Der Erfindung liegt die Aufgabe zugrunde, die gattungsgemäße Getriebeturbomaschine mit integriertem Getriebe so zu gestalten, dass die vorgenannten Nachteile vermieden werden und zudem die Anbindung eines Axialexpanders an das Gehäuse auch bei hohen Eintrittstemperaturen des zu expandierenden Mediums ermöglicht wird.

Die Aufgabe wird bei einer gattungsgemäßen Getriebeturbomaschine mit integriertem Getriebe erfindungsgemäß durch die kennzeichnenden Merkmale des Anspruchs 1 gelöst. Vorteilhafte Ausgestaltungen der Erfindung sind Gegenstand der Unteransprüche.

Mit Hilfe der erfindungsgemäß gestalteten Getriebeturbomaschine lässt sich ein Maschinenstrang aufbauen, der die grundsätzlichen Vorteile der höheren Volumenströme eines axialen Expanders ausnutzt und gleichzeitig den damit einhergehenden strömungstechnischen und thermischen Belastungen gerecht wird.

Der Axialexpander ist im Bereich seines axialen Gehäuseanfangs mit dem Gehäuse des Getriebes der Getriebeturbomaschine verbunden, so dass über dessen Ritzelwellen eine drehfeste Verbindung mit dem Axialexpander entsteht. Die Einströmkanäle für das zu expandierende sowie sehr heiße Prozessmedium befinden sich radial am axialen Anfang des Axialexpanders, und im Gegensatz zu radialen Expandern befindet sich das heiße Prozessgas in unmittelbarer Nähe zum Getriebegehäuse. Um dahingehend negative Einflüsse auf die Funktionsfähigkeit des Getriebes und insbesondere des Gehäuses zu verhindern, wird der Übergangsbereich zwischen Axialexpander und Getriebe durch ein Kühlmedium gekühlt.

Ein Ausführungsbeispiel der Erfindung ist in den Zeichnungen dargestellt.
- Fig. 1:: Schematische Darstellung einer Getriebeturbomaschine mit Getriebe und An- und Abtriebsaggregaten
- Fig. 2:: Getriebe einer Getriebeturbomaschine in perspektivischer Darstellung
- Fig. 3:: Detaildarstellung zur Kühlung in den Gehäusen des Getriebes und des Axialexpanders
- Fig. 4:: Detaildarstellung zur Kühlung in der Zwischenwand zwischen den Gehäusen des Getriebes und des Axialexpanders gemäss einer nicht zur Erfindung gehörenden Ausführung.

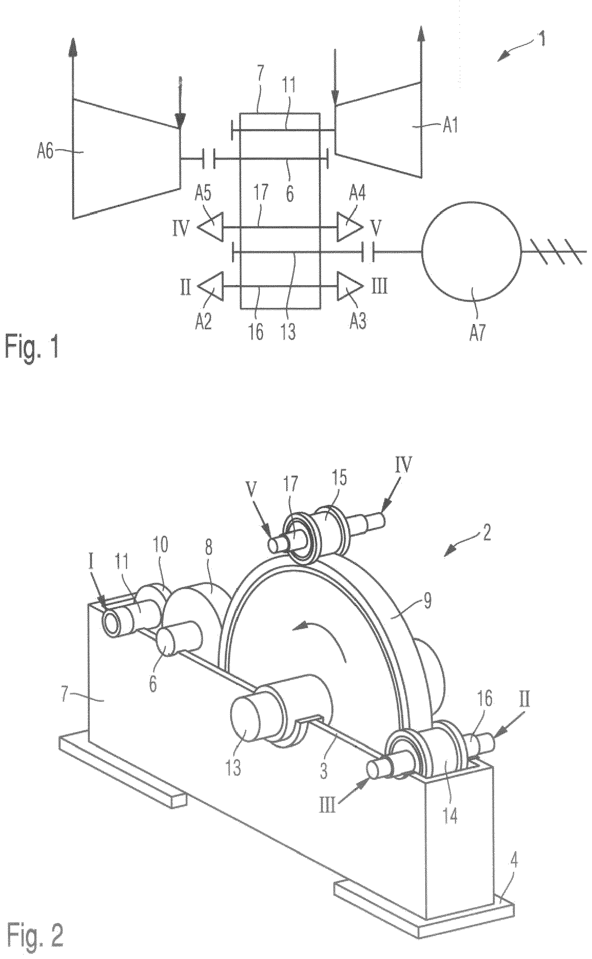

Die in Fig. 1 dargestellte Getriebeturbomaschine ist Teil einer chemischen Anlage zur Behandlung und Weiterverarbeitung von Gasen. Eine solche

Getriebeturbomaschine (1) integriert über ein Getriebe (2) An- und/oder Abtriebsmaschinen (A1, A2, A3, A4, A5, A6, A7) zu einem Maschinenstrang, wobei einerseits als Antriebsaggregate Dampfturbinen, Gasturbinen, Expander sowie Motoren und als Abtriebsaggregate Kompressoren sowie Generatoren möglich sind.

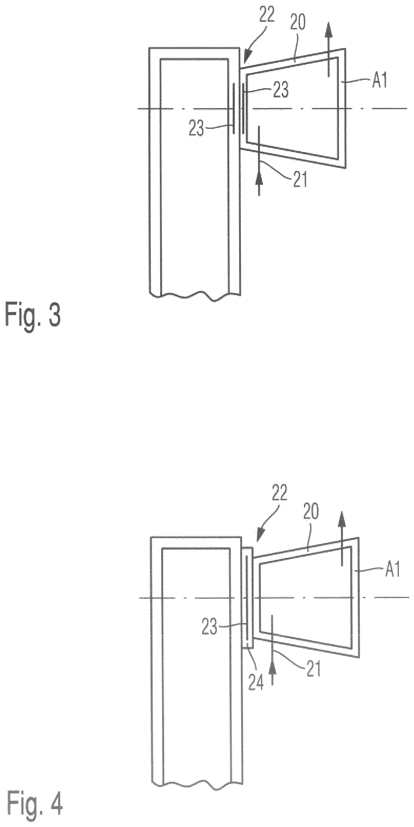

Die einzelnen Aggregate sind miteinander gekuppelt und auf einem oder mehrere Grundrahmen, den in Figur 2 exemplarisch dargestellten Maschinenfundamenten (4), montiert. Unterhalb der Maschinenfundamente (4) befinden sich die in den Figuren 1 bis 4 nicht dargestellten Kühler, Kondensatoren und weitere für die Erfindung nicht relevante aber für den Betrieb des Maschinenstranges notwendige Apparate.

Je nach Art des zu bedienenden chemischen Prozesses können zusammen oder alleine als Antriebsaggregate (A1, A6, A7) ein Axialexpander (A1), eine Dampfturbine (A6) und ein Motor (A7) ausgebildet sein. Der Axialexpander (A1) wird über die Ritzelwelle (11), die Dampfturbine (A6) wird über die Antriebswelle (6) und der Motor (A7) wird über die Welle (13) des Großrades (9) der Getriebeturbomaschine (1) in Wirkverbindung gebracht.

Das Getriebe (2) der Getriebeturbomaschine (1) nach Fig. 2 umfasst ein Gehäuse (7), in dem ein Antriebsritzel (8), ein Großrad (9) und weitere Ritzel (10, 14, 15) angeordnet sind. Das Antriebsritzel (8) ist auf der Antriebswelle (6) befestigt, die in dem Gehäuse (7) der Getriebeturbomaschine (1) gelagert ist. Das Antriebsritzel (8) steht mit einem ersten Ritzel (10) in Eingriff, das auf einer ersten Ritzelwelle (11) drehfest befestigt ist. Die erste Ritzelwelle (11) trägt auf ihrem Ende ein Laufrad, das drehfest mit einem ein- oder mehrstufig fliegend gelagerten Axialexpander (A1) verbunden ist.

Das Antriebsritzel (8) steht auf der dem ersten Ritzel (10) abgewandten Seite mit dem Großrad (9) in Eingriff, das auf einer in dem Gehäuse (7) gelagerten Welle (13) drehfest befestigt ist. Die über das Antriebsritzel (8) eingeleitete Leistung des Antriebsaggregates (A6) wird gleichzeitig an das Großrad (9) und das erste, zu dem Axialexpander (A1) gehörende Ritzel (10) abgegeben.

Das Großrad (9) steht mit einem zweiten Ritzel (14) und einem dritten Ritzel (15) in Eingriff, die jeweils auf einer zweiten und einer dritten in dem Gehäuse (7) gelagerten Ritzelwelle (16, 17) drehfest befestigt sind. Die zweite Ritzelwelle (16) trägt an ihren Enden die Laufräder der Kompressorstufen (II, III). Die dritte Ritzelwelle (17) trägt an ihren Enden die Laufräder der Kompressorstufen (IV, V). Alle Expander- und Kompressorstufen sind auf den entsprechenden Ritzelwellen fliegend gelagert.

Die Antriebswelle (6), die erste Ritzelwelle (11), die zweite Ritzelwelle (16) und die Welle (13) des Großrades (9) liegen in derselben horizontalen Ebene (3). Die dritte Ritzelwelle (17) liegt oberhalb dieser Ebene (3). In der Darstellung der Fig. 2 befindet sich in Bezug auf das Großrad (9) das Antriebsritzel (8) vorzugsweise in der 9-Uhr-Stellung, das zweite Ritzel (14) vorzugsweise in der 3-Uhr-Stellung und das dritte Ritzel (15) vorzugsweise in der 12-Uhr-Stellung. In Bezug auf das Antriebsritzel (8) befindet sich das erste Ritzel (10) vorzugsweise in der 9-Uhr-Stellung und das Großrad (9) vorzugsweise in der 3-Uhr Stellung.

Das vorhergehend beschriebene Getriebe (2) gemäß Figur 2 bildet die Basis für die gesamte Getriebeturbomaschine (1), dabei ist das Getriebe (2) das Kernstück eines im Wesentlichen aus An- und/oder Abtriebsaggregaten (A1, A2, A3, A4, A5, A6, A7) bestehenden Maschinenstrangs.

Gemäss der Erfindung umfasst das in den Maschinenstrang integrierte Getriebe (2) im Wesentlichen ein zentrales Großrad (9) mit einer Großradwelle (13), mehreren Ritzeln (10, 14, 15) mit Ritzelwellen (11, 16, 17) und ein Antriebsritzel (8) mit Antriebswelle (6). Das Großrad (9) steht mit den Ritzeln (14, 15) in Eingriff und die Enden der Ritzelwellen (16, 17) stehen drehfest mit einem Abtriebsaggregat (A2, A3, A4, A5) in Verbindung; vorzugsweise sind dies die Kompressoren (A2, A3, A4, A5) der Kompressorstufen II bis V. Ebenfalls steht das Großrad (9) mit dem Antriebsritzel (8) in Eingriff, das über die Enden der Antriebswelle (6) drehfest mit einem Antriebsaggregat (A6) verbunden ist. Die Großradwelle (13) des Großrades (9) ist im Ausführungsbeispiel mit einem Motor bzw. Generator (A7) verbunden. Das Antriebsritzel (8) wiederum steht mit dem Ritzel (10) in Eingriff und die Enden der Ritzelwelle (11) stehen drehfest mit einem als Antriebsaggregat dienenden Axialexpander (A1) in Verbindung.

Das Gehäuse (20) des Axialexpanders (A1) ist derart an das Gehäuse (7) des Getriebes (2) angeflanscht, dass der Strömungseintrittsbereich (21) des

Axialexpanders (A1) unmittelbar an das Gehäuse (7) des Getriebes (2) angrenzt, wobei der Übergangsbereich (22) zwischen Axialexpander (A1) und Getriebe (2) durch ein Kühlmedium gekühlt wird. Der mengenmäßige Bedarf sowie eventuell auch die Auswahl des Kühlmediums können je nach Art des An- oder Abtriebsaggregates (A1, A2, A3, A4, A5, A6, A6) von den Temperaturen der jeweiligen Prozessmedien am Ein- und/oder Austritt des jeweiligen An- oder Abtriebsaggregates (A1, A2, A3, A4, A5, A6, A6) abhängen.

Im Ausführungsbeispiel gemäß den Figuren 1 und 2 enthält die Getriebeturbomaschine (1) eine Dampfturbine (A6) als Antriebsaggregat, sodass sich der Bedarf sowie die Auswahl des Kühlmediums in diesem Fall nach der Eintrittstemperatur des Dampfes in die Dampfturbine (A6) richten. Als Kühlmedien sind vorzugsweise Dampf und Luft denkbar, diese können einerseits den Prozessen der Getriebeturbomaschine oder andererseits angrenzenden Prozessen sowie externen Quellen entnommen werden.

In einer Ausführungsform der Erfindung befinden sich entweder im Gehäuse (20) des Axialexpanders (A1) oder im Gehäuse (7) des Getriebes (2) Kanäle (23) für das Kühlmedium, möglich sind aber auch Kanäle (23) zur Kühlung in beiden Gehäusen (7, 20).

Die direkte Anbindung des Gehäuses (20) des Axialexpanders (A1) an das Gehäuse (7) des Getriebes (2) der Getriebeturbomaschine (1) erfordert keine zusätzlichen Verbindungswellen; im Idealfall wird die Welle des Axialexpanders (A1) direkt drehfest mit der Ritzelwelle (11) gekoppelt und ist ein- oder mehrstufig fliegend gelagert. Somit liegt eine kompakte Anordnung vor, und dahingehend kann in einer vorteilhaften Ausgestaltung der erfinderischen Anordnung auch auf getrennte Maschinenfundamente (4) verzichtet werden. Neben den räumlichen Vorteilen erfordert diese Anordnung wesentlich weniger Material für das gemeinsame Maschinenfundament (4) und letzthin ergeben sich auch Vorteile hinsichtlich der schwingungstechnischen Auslegung der Gesamtanordnung.

Zur Funktionsfähigkeit des erfindungsgemäßen Maschinenstrangs sind die an den Ritzelwellen (16, 17) angebrachten Abtriebsaggregate (A2, A3, A4, A5) als Kompressorstufen (II, III, IV, V) ausgebildet; als Antriebsaggregat (A6) steht eine Dampf- oder Gasturbine (A6) drehfest mit dem Antriebsritzel (8) in Wirkverbindung. Denkbar als Antriebsaggregat sind allerdings auch andere Turbokraftmaschinen sowie elektrische Antriebsmaschine oder Verbrennungsantriebsmaschinen.

Der Motor/Generator (A7) steht als Antriebsaggregat direkt oder über ein Getriebe (2) mit der Großradwelle (13) in Eingriff und wird je nach der Art des chemischen Prozesses auch weggelassen.

Die Getriebeturbomaschine (1) kann mit einer Turbokraftmaschine, beispielsweise einer Dampf- oder Gasturbine (A6), einer elektrischen Antriebsmaschine oder in Sonderfällen auch mit einer Verbrennungskraftmaschine als Antriebsaggregat gestartet werden. Der Motor (A7) (Motor/Generator (A7) in Motorschaltung) übernimmt dann den Antrieb des Maschinenstranges ab der Synchrondrehzahl des Motors (A7). Der Axialexpander (A1) gibt erst Leistung ab, wenn der Maschinenstrang sowie der zugehörige chemische Prozess in Gang gekommen ist und das Abgas oder der Abdampf aus dem Prozess den Axialexpander (A1) antreibt. Der Axialexpander (A1) kann auch mit Luft betrieben werden, die von einem der Kompressoren (A2, A3, A4, A5) der Getriebeturbomaschine (1) verdichtet wurde, so dass ein Teil der Energie zurück gewonnen werden kann.

### Bezugszeichenliste

- 1: Getriebeturbomaschine
- 2: Getriebe
- 3: horizontale Ebene
- 4: Maschinenfundament
- 6: Antriebswelle
- 7: Gehäuse des Getriebe
- 8: Antriebsritzel
- 9: Großrad
- 10: erstes Ritzel
- 11: erste Ritzelwelle
- 13: Großradwelle
- 14: zweites Ritzel
- 15: drittes Ritzel
- 16: zweite Ritzelwelle
- 17: dritte Ritzelwelle
- 20: Gehäuse des Axialexpanders
- 21: Strömungseintrittsbereich
- 22: Übergangsbereich
- 23: Kanäle zur Kühlung
- 24: Zwischenwand
Expanderstufen
- II bis V: Kompressorstufen

- A1 - A7: An- oder Abtriebsaggregate
- A1: Axialexpander für Expanderstufen (ein- oder mehrstufig)
- A2: Kompressor für Stufe II
- A3: Kompressor für Stufe III
- A4: Kompressor für Stufe IV
- A5: Kompressor für Stufe V
- A6: Turbokraftmaschine/Motor
- A7: Motor/Generator

## Patentansprüche

1. Getriebeturbomaschine (1), die über ein Getriebe (2) wenigstens ein Antriebs- und mehrere Abtriebsaggregate (A1, A2, A3, A4, A5, A7) zu einem Maschinenstrang integriert und das Getriebe (2) ein Gehäuse (7) umfasst, wobei das Getriebe (2) im Wesentlichen ein zentrales Großrad (9) mit einer Großradwelle (13) und mehrere Ritzel (10, 14, 15) mit Ritzelwellen (11, 16, 17) und ein Antriebsritzel (8) umfasst, die in dem Gehäuse (7) angeordnet sind, wobei zwischen dem Großrad (9) sowie einem der Ritzel (10, 14, 15) das Antriebsritzel (8) mit einer Antriebswelle (6) angeordnet ist, das in Wirkverbindung mit dem Großrad (9) sowie einem der Ritzel (10, 14, 15) steht, und wobei das Antriebsritzel (8) mit einem Antriebsaggregat (A6) in Wirkverbindung steht,
wobei das Großrad (9) mit den Ritzeln (10, 14, 15) in Wirkverbindung steht und die Enden der Ritzelwellen (11, 16, 17) jeweils in Wirkverbindung mit einem An- und/oder Abtriebsaggregat (A1, A2, A3, A4, A5) verbunden sind, wobei die Großradwelle (13) mit einem An- und/oder Abtriebsaggregat (A7) in Wirkverbindung steht,
wobei das Antriebsritzel (8) auf der Antriebswelle (6) befestigt ist und mit einem ersten Ritzel (10) in Eingriff steht, das auf einer ersten Ritzelwelle (11) drehfest befestigt ist und am Ender der Ritzelwelle (11) ein Laufrad angebracht ist und das Antriebsritzel (8) auf der dem Ritzel (10)
abgewandten Seite mit dem Großrad in Eingriff steht, welches auf einer im Gehäuse (7) gelagerten Welle (13) drehfest befestigt ist, **dadurch gekennzeichnet, dass** das Laufrad der Ritzelwelle (11) drehfest mit einem ein- oder mehrstufigen fliegend gelagerten Axialexpander (A1) verbunden ist, welcher ein Gehäuse (20) und einen Strömungseintrittsbereich (21) aufweist, wobei der Axialexpander (A1) im Bereich seines axialen Gehäuseanfangs am Gehäuse (7) des Getriebes (2) angeflanscht ist, so dass über die Ritzelwellen der Getriebeturbomaschine eine drehfeste Verbindung mit dem Axialexpander (A1) gebildet ist und sich Einströmkanäle des Axialexpanders für dessen heißes und zu expandierendes Prozessmedium radial am axialen Gehäuseanfang des Axialexpanders befinden, so dass der Strömungseintrittsbereich (21) des Axialexpanders (A1) unmittelbar an das Gehäuse (7) des Getriebes (2) angrenzt und ein Übergangsbereich (22) zwischen Axialexpander (A1) und Getriebe (2) durch ein Kühlmedium gekühlt werden kann, indem das Gehäuse (20) des Axialexpanders (A1) und/oder das Gehäuse (7) des Getriebes (2) im Übergangsbereich Kanäle (23) für das Kühlmedium beinhalten.

2. Getriebeturbomaschine (1) nach Anspruch 1,
wobei der mengenmäßige Bedarf und/oder die Zusammensetzung des Kühlmediums je nach Art des An- oder Abtriebsaggregates (A1, A2, A3, A4, A5, A6, A6) von der jeweiligen Temperatur eines Prozessmediums beim Ein- und/oder Austritt des jeweiligen An- oder Abtriebsaggregates (A1, A2, A3, A4, A5, A6, A6) abhängt.

3. Getriebeturbomaschine (1) nach einem der vorhergehenden Ansprüche,
**dadurch gekennzeichnet,**
**dass** das Getriebe (2) sowie die An- und/oder Abtriebsaggregate (A1, A2, A3, A4, A5, A6, A7) über deren Gehäuse (20) an ein gemeinsames Maschinenfundament (4) befestigt sind.

4. Getriebeturbomaschine (1) nach einem der vorhergehenden Ansprüche,
**dadurch gekennzeichnet,**
**dass** die an den Ritzelwellen (16, 17) angebrachten Abtriebsaggregate (A2, A3, A4, A5) Laufräder von Kompressorstufen (II, III, IV, V) sind.

5. Getriebeturbomaschine (1) nach einem der vorhergehenden Ansprüche,
**dadurch gekennzeichnet,**
**dass** das mit dem Antriebsritzel (8) in Wirkverbindung stehende Antriebsaggregat (A6) eine Turbokraftmaschine, eine elektrische Antriebsmaschine oder eine Verbrennungsantriebsmaschine ist.

6. Getriebeturbomaschine (1) nach einem der vorhergehenden Ansprüche,
**dadurch gekennzeichnet,**
**dass** das drehfest mit der Großradwelle (13) in Wirkverbindung stehende Antriebsaggregat (A7) ein Motor ist.

## Claims

1. A geared turbomachine (1), which via a gearing (2) integrates a drive unit and multiple output units (A1, A2, A3, A4, A5, A7) to form a machine train and the gearing (2) comprises a housing (7), wherein the gearing (2) substantially comprises a central bull gear (9) having a bull gear shaft (13) and multiple pinions (10, 14, 15) with pinion shafts (11, 16, 17) and a drive pinion (8), which are arranged in the housing (7), wherein between the bull gear (9) and one of the pinions (10, 14, 15) the drive pinion (8) with a driveshaft (6) is arranged, which is operatively connected to the bull gear (9) and one of the pinions (10, 14, 15), and wherein the drive pinion (8) is operatively connected to a drive unit (A6),
wherein the bull gear (9) is operatively connected to the pinions (10, 14, 15) and the ends of the pinion shafts (11, 16, 17) in each case are operatively connected to a drive unit and/or output unit (A1, A2, A3, A4, A5), wherein the bull gear shaft (13) is operatively connected to a drive unit and/or output unit (A7),
wherein the drive pinion (8) is mounted on the driveshaft (6) and is in mesh with a first pinion (10), which is non-rotatably mounted on a first pinion shaft (11) and at the end of the pinion shaft (11) an impeller is mounted and the drive pinion (8), on the side facing away from the pinion (10), is in mesh with the bull gear, which is non-rotatably mounted on a shaft (13) mounted in the housing (7),
**characterized in that** the impeller of the pinion shaft (11) is non-rotatably connected to a single or multi-stage floatingly mounted axial expander (A1), which comprises a housing (20) and a flow inlet region (21), wherein the axial expander (A1), in the region of its axial housing start, is flanged to the housing (7) of the gearing (2), so that via the pinion shafts of the geared turbomachine a non-rotatable connection with the axial expander (A1) is formed and inflow passages of the axial expander for the hot process medium to be expanded of the same, are located radially on the axial housing start of the axial expander, so that the flow inlet region (21) of the axial expander (A1) directly adjoins the housing (7) of the gearing (2) and a transition region (22) between axial expander (A1) and gearing (2) can be cooled by a cooling medium **in that** the housing (20) of the axial expander (A1) and/or the housing (7) of the gearing (2) contain passages (23) for the cooling medium in the transition region.

2. The geared turbomachine (1) according to Claim 1,
wherein the quantitative requirement and/or the composition of the cooling medium, depending on the type of the drive unit or output unit (A1, A2, A3, A4, A5, A6, A7), depends on the respective temperature of a process medium when entering and/or exiting the respective drive unit or output unit (A1, A2, A3, A4, A5, A6, A7).

3. The geared turbomachine (1) according to any one of the preceding claims,
**characterized in that**
the gearing (2) and the drive units and/or output units (A1, A2, A3, A4, A5, A6, A7) are mounted, via their housings (20), to a common machine foundation (4) .

4. The geared turbomachine (1) according to any one of the preceding claims,
**characterized in that**
the output units (A2, A3, A4, A5) mounted to the pinion shafts (16, 17) are impellers of compressor stages (II, III, IV, V).

5. The geared turbomachine (1) according to any one of the preceding claims,
**characterized in that**
the drive unit (A6) that is operatively connected to the drive pinion (8) is a turbo power machine, an electric drive machine or an internal combustion drive engine.

6. The geared turbomachine (1) according to any one of the preceding claims,
**characterized in that**
the drive unit (A7) that is non-rotatably operatively connected to the bull gear shaft (13) is a motor.

## Revendications

1. Turbocompresseur (1), qui comprend au moins un groupe d'entrainement et plusieurs groupes de sortie (A1, A2, A3, A4, A5, A7) intégrés en un train de machines par l'intermédiaire d'une boîte de vitesses (2), dans lequel la boite de vitesses (2) comprend un carter (7), dans lequel la boite de vitesses (2) comprend essentiellement une grande roue centrale (9) avec un grand arbre de roue (13) et plusieurs pignons (10, 14, 15) avec des arbres de pignon (11, 16, 17) et un pignon menant (8), qui sont disposés dans le carter (7), dans lequel entre la grande roue (9) et un des pignons (10, 14, 15) est disposé le pignon menant (8) avec un arbre menant (6), qui est relié fonctionnellement à la grande roue (9) et à l'un des pignons (10, 14, 15), et dans lequel le pignon d'entraînement (8) est en liaison opérationnelle avec une unité d'entraînement (A6),
dans lequel la grande roue (9) est en liaison opérationnelle avec les pignons (10, 14, 15) et les extrémités des arbres de pignon (11, 16, 17) sont respectivement reliées en liaison opérationnelle avec une unité d'entraînement et/ou de sortie (A1, A2, A3, A4, A5), dans lequel l'arbre de grande roue (13) est en liaison opérationnelle avec une unité d'entrée et/ou de sortie (A7),
dans lequel le pignon d'entraînement (8) est fixé sur l'arbre d'entraînement (6) et est en prise avec un premier pignon (10), qui est fixé de manière solidaire en rotation sur un premier arbre de pignon (11) et une roue est fixée à l'extrémité de l'arbre de pignon (11) et le pignon d'entraînement (8) est en prise sur le côté qui se détourne du pignon (10) avec la grande roue, qui est fixée sur un arbre (13) monté dans le logement (7) de manière solidaire en rotation,
**caractérisé en ce que** la roue de l'arbre de pignon (11) est reliée de manière solidaire en rotation à un détendeur axial (A1) suspendu à un ou plusieurs étages, qui présente un logement (20) et une zone d'entrée d'écoulement (21), dans lequel le détendeur axial (A1) dans la zone de son début de logement axial est bridé sur le logement (7) de la boite de vitesses (2), de sorte qu'un raccordement solidaire en rotation avec le détendeur axial (A1) soit formé via les arbres de pignon de la turbomachine et les canaux d'écoulement du détendeur axial pour son fluide de processus d'expansion chaud et à détendre se trouvent radialement au début axial du logement du détendeur axial (A1), de sorte que la zone d'entrée d'écoulement (21) du détendeur axial (A1) soit directement adjacente au logement (7) de la boîte de vitesses (2) et une zone de transition (22) entre le détendeur axial (A1) et la boîte de vitesses (2) puisse être refroidie par un fluide de refroidissement, **en ce que** le boîtier (20) du détendeur axial (A1) et/ou le boîtier (7) de la boîte de vitesses (2) contiennent des canaux (23) pour le fluide de refroidissement dans la zone de transition.

2. Turbocompresseur (1) selon la revendication 1,
dans lequel les exigences quantitatives et/ou la composition du fluide de refroidissement selon le type de groupe d'entraînement ou de sortie (A1, A2, A3, A4, A5, A6, A7) dépend de la température respective d'un fluide de processus lors de l'entrée et/ou la sortie du groupe d'entraînement ou de sortie respectif (A1, A2, A3, A4, A5, A6, A7).

3. Turbocompresseur (1) selon une des revendications précédentes,
**caractérisé en ce que**
la boite de vitesses (2) et les groupes d'entraînement et/ou de sortie (A1, A2, A3, A4, A5, A6, A7) sont fixés via leur logement (20) à un bâti de machine (4) commun.

4. Turbocompresseur (1) selon une des revendications précédentes,
**caractérisé en ce que**
les groupes de sortie (A2, A3, A4, A5) montés sur les arbres de pignon (16, 17) sont des hélices d'étages de compresseur (II, III, IV, V).

5. Turbocompresseur (1) selon une des revendications précédentes,
**caractérisé en ce que**
l'unité d'entraînement (A6) en liaison opérationnelle avec le pignon d'entraînement (8) est un moteur turbo, un moteur d'amorçage électrique ou un moteur d'amorçage à combustion.

6. Turbocompresseur (1) selon une quelconque des revendications précédentes,
**caractérisé en ce que**
le groupe d'entraînement (A7) en liaison opérationnelle de manière solidaire en rotation avec l'arbre de grande roue (13) est un moteur.
